# EUROPÄISCHE PATENTSCHRIFT

(11) **EP 0 646 438 B1**
(45) Veröffentlichungstag und Bekanntmachung des Hinweises auf die Patenterteilung: **09.10.1996**
(21) Anmeldenummer: 94890079.0
(22) Anmeldetag: 04.05.1994
(51) Int. Cl.: B25B 11/00, B23Q 1/25, B23Q 1/01

(54) **Arbeitstisch für Werkzeugmaschinen**
Worktable for machine-tools
Table pour machines-outils

(30) Priorität: 05.10.1993 AT 1989/93
(43) Veröffentlichungstag der Anmeldung: 05.04.1995
(73) Patentinhaber: GFM Gesellschaft für Fertigungstechnik und Maschinenbau Aktiengesellschaft, A-4403 Steyr (AT)
(72) Erfinder: Blaimschein, Gottfried Dipl.-Ing., A-4407 Steyr (AT)
(74) Vertreter: Hübscher, Gerhard, Dipl.-Ing.

(56) Entgegenhaltungen:
- EP-A- 0 319 710
- EP-A- 0 490 746
- EP-A- 0 505 668
- EP-A- 0 518 736
- EP-A- 0 537 674
- US-A- 4 088 312

## Beschreibung

Die Erfindung bezieht sich auf einen Arbeitstisch für Werkzeugmaschinen mit einer Mehrzahl von Unterdrucksaugern zur Halterung der zu bearbeitenden Werkstücke, wobei die Unterdrucksauger kopfseitig Saugnäpfe tragende Hubstempel aufweisen, die über Stelltriebe höhenverstellbar geführt und mittels Klemmeinrichtungen in beliebiger Höhenlage fixierbar sind.

Arbeitstische mit einstellbaren Unterdrucksaugern haben sich bereits zum Spannen von räumlich vorgeformten dünnwandigen Werkstücken oder von Werkstücken, die eine gekrümmte Oberfläche besitzen, gut bewährt, da sich diese Unterdrucksauger einerseits auf Grund ihrer höhenverstellbaren Hubstempel und anderseits auf Grund der Elastizitätseigenschaften des Saugermaterials oder einer gelenkigen Lagerung der Saugnäpfe an die jeweiligen Werkstücke anpassen lassen und dadurch auch Werkstücke komplizierter und heikler Form mit für eine durchzuführende Bearbeitung ausreichender Festigkeit und Stabilität halten können.

Wie die US-PS 4 684 113 zeigt, ist es zum Positionieren der Unterdrucksauger bereits bekannt, die einzelnen Hubstempel computergesteuert entsprechend der Werkstückoberfläche in die jeweilige Sollposition hochzufahren und in dieser Sollposition über eine Klemmeinrichtung zu fixieren, was allerdings für jeden Unterdrucksauger einen positionierbaren Stelltrieb erfordert und damit zu einem hohen Bau- und Steuerungsaufwand führt.

Gemäß der GB-A 22 05 258 wurde auch schon vorgeschlagen, zum Positionieren der Unterdrucksauger das dem Arbeitstisch zugeordnete Werkzeugaggregat heranzuziehen, das meist ohnehin mit einer in z-Richtung ansteuerbaren Werkstückspindel od. dgl. ausgestattet ist und damit für die jeweiligen Unterdrucksauger die exakte Höhenposition vorgeben kann. Zum Positionieren der Unterdrucksauger braucht daher lediglich die Werkstückspindel oberhalb des jeweiligen Saugers in die entsprechende Sollhöhe gebracht und dann der Hubstempel des Unterdrucksaugers bis zum Anschlag an die justierte Werkstückspindel hochgefahren zu werden, so daß diese Unterdrucksauger auch ohne aufwendige positionierbare Stelltriebe justiert und mit einer geeigneten Klemmeinrichtung in justierter Lage fixiert werden können. Allerdings bereitet bisher das Auflegen eines Werkstückes auf eine Vielzahl von positionierten und unterdruckbeaufschlagten Saugern erhebliche Schwierigkeiten, da beim Auflegen des Werkstückes auf die Saugnäpfe die einzelnen Saugnäpfe erst mit dem Werkstück in die für ein ordnungsgemäßes Ansetzen an der Werkstückoberfläche richtige Winkellage geschwenkt werden müssen, was aber häufig durch ein zu schnelles Ansaugen der unterdruckbeaufschlagten Saugnäpfe an der Werkstückoberfläche mißlingt und ein fehlerhaftes Abstützen mit sich bringt. Werden die Unterdrucksauger üblicherweise gleichzeitig mit dem Hochfahren in ihre Sollposition automatisch an eine Unterdruckquelle angeschlossen, besteht somit die Gefahr einer Werkstückhalterung ohne die gewünschte Exaktheit und das Spannen leicht verformbarer dünnwandiger Werkstücke ist überhaupt nicht durchführbar.

Aus der EP-A 0 505 668 geht auch schon ein Arbeitstisch gemäß dem Oberbegriff des Anspruchs 1 als bekannt hervor, bei dem die Unterdrucksauger jeweils für sich und in zwei Leistungsstufen hochgefahren werden können. Daher ist es möglich, hier vorerst einige der Sauger, beispielsweise die im Randbereich der Werkstücke liegenden Sauger, als Auflagepunkte für ein zu bearbeitendes Werkstück bis in ihre Endstellung hochzufahren, dann das Werkstück auf diese festen Auflagepunkte aufzusetzen, so daß sich diese wenigen Sauger noch richtig am Werkstück anlegen und festsaugen können, worauf erst alle anderen im Innenbereich der Werkstücke anzusetzenden Sauger bis zur Anlage am bereits positionierten Werkstück hochfahren und hier ihre Abstützfunktion erfüllen. Die bis zum Ansetzen am Werkstück hochfahrenden Unterdrucksauger werden dabei mit geringerer Kraft hochgedrückt, um beim Ansetzen nicht die positionierende Halterung der Werkstücke zu beeinträchtigen. Dieses nachträgliche Ansetzen der Mehrzahl der Sauger erfordert allerdings ein ausreichend steifes Werkstück, das durch seine Formstabilität auch die Sollpositionen der Sauger mitbestimmt. Für heikle Werkstücke mit einer biegeweichen Oberfläche sind diese Arbeitstische ungeeignet.

Der Erfindung liegt daher die Aufgabe zugrunde, diese Mängel zu beseitigen und einen Arbeitstisch der eingangs geschilderten Art zu schaffen, der auf verhältnismäßig einfache und aufwandsarme Weise ein einwandfreies und schonendes Abstützen und Spannen beliebiger Werkstücke, insbesondere auch heikler Werkstücke gewährleistet.

Die Erfindung löst diese Aufgabe dadurch, daß ein mit dem Hubspindel verbindbarer Teil jeder Klemmeinrichtung in Verstellrichtung der Hubstempel um einen vorbestimmten Verschiebeweg verschiebbar abgestützt und über eine Stellvorrichtung zwischen den Endpunkten des Verschiebeweges hin- und herbewegbar ist. Die schiebeverstellbaren Klemmeinrichtungen erlauben es, die Unterdrucksauger von einer der Höhe nach vorjustierten Position aus um eine genau bestimmte Wegstrecke der Höhe nach zu verschieben, so daß sich diese Unterdrucksauger gewissermaßen von einer justierten Warteposition aus in eine exakt vorherbestimmbare Sollposition bringen lassen, was ein rationelles und auch schonendes und sorgfältiges Spannen unterschiedlichster Werkstücke ermöglicht.

Den Klemmeinrichtungen könnten durchaus eigene Stellvorrichtungen für die Hubbewegung der Klemmeinrichtungen zugeordnet sein, doch zweckmäßiger ist es, wenn die Stellvorrichtung der Klemmvorrichtungen jeweils aus dem Stelltrieb des zugehörigen Hubstempels und einer Rückholfeder besteht, so daß sich auch die Klemmeinrichtung über den vorhandenen Stelltrieb des Hubstempels verstellen läßt. Je nach dem ob die Klemmeinrichtung den Hubstempel fixierend klemmt oder nicht, kann durch eine Betätigung des zugehörigen Stelltriebes der Hubstempel allein gegenüber der Klemmeinrichtung oder zusammen mit der Klemmeinrichtung bewegt werden, was sowohl das Höhenverstellen des Hubstempels als auch das Höhenbewegen der Klemmeinrichtung gewährleistet.

Werden die Unterdrucksauger beim Hochfahren aus ihrer Ruheposition automatisch an eine gemeinsame Unterdruckquelle angeschlossen, sind diese Unterdrucksauger konstruktionsbedingt bereits in ihrer Warteposition unterdruckbeaufschlagt, wodurch hohe Anforderungen an die Unterdruckquelle gestellt werden müssen. Um dies zu vermeiden, weisen zumindest die mit verschiebbar abgestützten Klemmeinrichtungen ausgestatteten Unterdrucksauger einzeln betätigbare Absperrorgane zum Anschluß an eine Unterdruckquelle auf, so daß durch gezieltes Öffnen oder Schließen dieser Absperrorgane die jeweiligen Unterdrucksauger wunschgemäß unterdruckbeaufschlagt oder belüftet werden. Damit ist es nun möglich, die Unterdrucksauger tatsächlich erst beim Hochfahren aus der Warteposition in die Sollposition zu aktivieren und ein leistungsraubendes Leersaugen der Saugnäpfe weitgehend zu unterbinden. Außerdem lassen sich durch ein bewußtes Belüften der Unterdrucksauger auch einzelne solche Sauger während der Werkstückhalterung absenken, ohne das Werkstück zu deformieren, um beispielsweise Platz für Bohrarbeiten od. dgl. zu schaffen.

Besonders vorteilhaft ist es dabei, wenn die Absperrorgane jeweils in Abhängigkeit von der Verschiebebewegung der zugehörigen Klemmeinrichtungen betätigbar sind, so daß keine eigenen Steuerungseinrichtungen für die Absperrorganbetätigung gebraucht werden und die Absperrorgane gleichzeitig mit der entsprechenden Ansteuerung der Klemmeinrichtungen öffnen oder schließen.

Die Funktionsabhängigkeit zwischen Klemmeinrichtung und Absperrorgan kann auf unterschiedlichste Weise erreicht werden, wobei einfache Möglichkeiten darin bestehen, daß die schiebeverstellbaren Klemmeinrichtungsteile über Gestänge an einem Betätigungsteil der Absperrorgane angreifen oder mit Betätigungsschaltern für die Absperrorgane zusammenwirken. So kann durch eine mechanische Koppelung oder über einen geeigneten Schaltkreis die Verschiebebewegung der Klemmeinrichtungsteile schwierigkeitslose zum Betätigen der Absperrorgane genutzt werden, wobei jeweils eine Bewegung in Richtung Sollposition ein Öffnen und eine Bewegung zurück in Richtung Warteposition ein Schließen bewirken.

Der erfindungsgemäße Arbeitstisch erlaubt die Durchführung besonders vorteilhafter Verfahren zum Haltern eines Werkstückes. Dazu werden zuerst einige, vorzugsweise drei der Unterdrucksauger als Werkstückauflage in ihre Sollposition hochgefahren und gegebenenfalls fixiert und die übrigen der für die Werkstückhalterung vorgesehenen Unterdrucksauger in eine gegenüber ihrer Sollposition um die Verschiebeweglänge der Klemmeinrichtungen niedrigere Warteposition hochgefahren und in dieser mit den an den unteren Endpunkten der Verschiebewege sich befindenden Klemmeinrichtungen festgeklemmt, oder zuerst alle die zur Werkstückhalterung vorgesehenen Unterdrucksauger in eine gegenüber ihrer Sollposition um die Verschiebeweglänge der Klemmeinrichtungen niedrigere Warteposition hochgefahren und in dieser mit den Klemmeinrichtungen festgeklemmt und dann einige, vorzugsweise drei dieser Unterdrucksauger als Werkstückauflage durch Hochbewegen der Klemmeinrichtungen aus der Warteposition in ihre Sollposition gebracht, worauf das Werkstück auf die die Werkstückauflage bildenden Unterdrucksauger aufgelegt wird und dann die übrigen Unterdrucksauger durch Hochbewegen der Klemmeinrichtungen zu den oberen Endpunkten der Verschiebewege aus der Warteposition in ihre Sollposition gebracht werden.

Es fahren daher zuerst nur so viele Unterdrucksauger als Werkstückauflage hoch, wie zu einer sicheren und einwandfreien Auflage des Werkstückes erforderlich sind, also vorzugsweise drei, es können aber je nach Werkstückform auch zwei oder vier oder mehr als Werkstückauflage eingesetzt werden, und auf diese in ihre Sollposition hochgefahrenen Unterdrucksauger wird das zu spannende Werkstück aufgelegt und lagerichtig fixiert, wobei wegen der geringen Anzahl dieser bereits unterdruckbeaufschlagten Unterdrucksauger keinerlei Ansatzfehler zu befürchten sind. Die zum Spannen des Werkstückes erforderlichen Unterdrucksauger, gegebenenfalls mit Ausnahme der als Werkstückauflage hochgefahrenen Sauger, werden vor dem Auflegen des Werkstückes in eine Warteposition gebracht, welche Warteposition durch ein entsprechendes Höhenjustieren vorbestimmt wird. Dieses Höhenjustieren läßt sich beispielsweise durch eine computergesteuerte Werkzeugspindel, durch eine Werkstückschablone, aber auch händisch mit Meßanschlag od. dgl. durchführen, in welcher Warteposition die Hubstempel der Unterdrucksauger mit den Klemmeinrichtungen fixiert sind. Werden nun nach dem Auflegen des Werkstückes die Klemmeinrichtungen dieser Unterdrucksauger hochbewegt, fahren auch die Unterdrucksauger um genau die vorbestimmte Verschiebeweglänge hoch und ihre Saugnäpfe nehmen dann exakt die an die Werkstückoberfläche angepaßte Sollposition ein. Ohne das Werkstück zu gefährden, setzen die Saugnäpfe der Unterdrucksauger an der Werkstückoberfläche lagerichtig an, so daß eine einwandfreie und schonende Werkstückhalterung gewährleistet ist.

Da bei den meisten Arbeitstischen für alle Unterdrucksauger eine gemeinsame Unterdruckquelle vorgesehen ist, könnte beim gleichzeitigen Anschluß einer größeren Anzahl von Saugern die Unterdruckquelle zusammenbrechen und damit eventuell die positionierende Halterung des Werkstückes durch die die Werkstückauflage bildenden, ebenfalls an diese Unterdruckquelle angeschlossenen Unterdrucksauger gefährden. Um dies sicher zu vermeiden, werden daher die Unterdrucksauger gruppenweise in die Warteposition hochgefahren bzw. aus der Warteposition in die Sollposition gebracht, so daß auch lediglich ein gruppenweiser Anschluß der Sauger an die Unterdruckquelle erfolgt und keine Überbeanspruchung der Unterdruckquelle befürchtet werden muß.

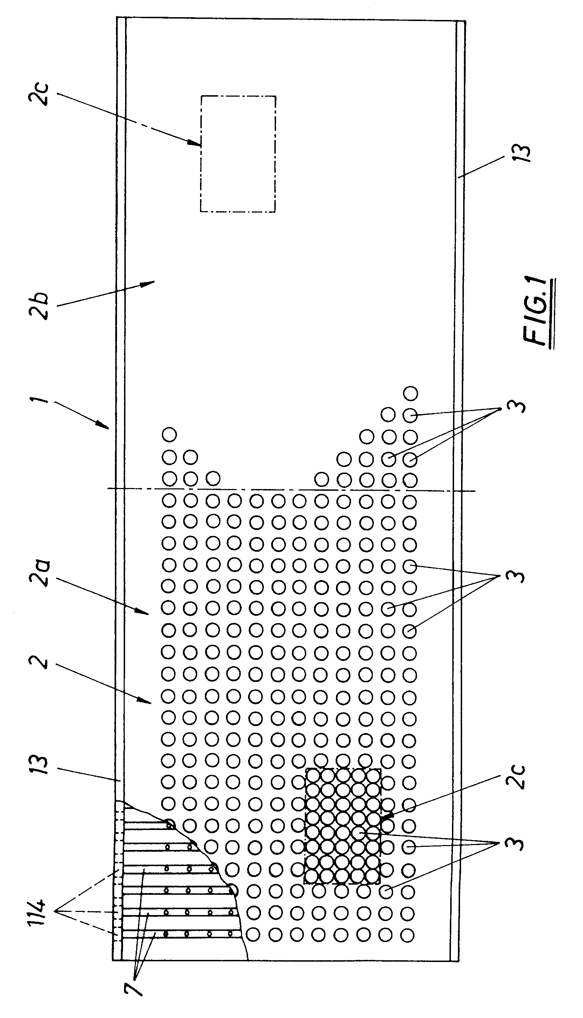

In der Zeichnung ist der Erfindungsgegenstand beispielsweise veranschaulicht, und zwar zeigen Fig. 1 einen erfindungsgemäßen Arbeitstisch in einer schematischen Draufsicht und Fig. 2 und 3 zwei Ausführungsbeispiele eines Unterdrucksaugers dieses Arbeitstisches jeweils im Vertikalschnitt größeren Maßstabes.

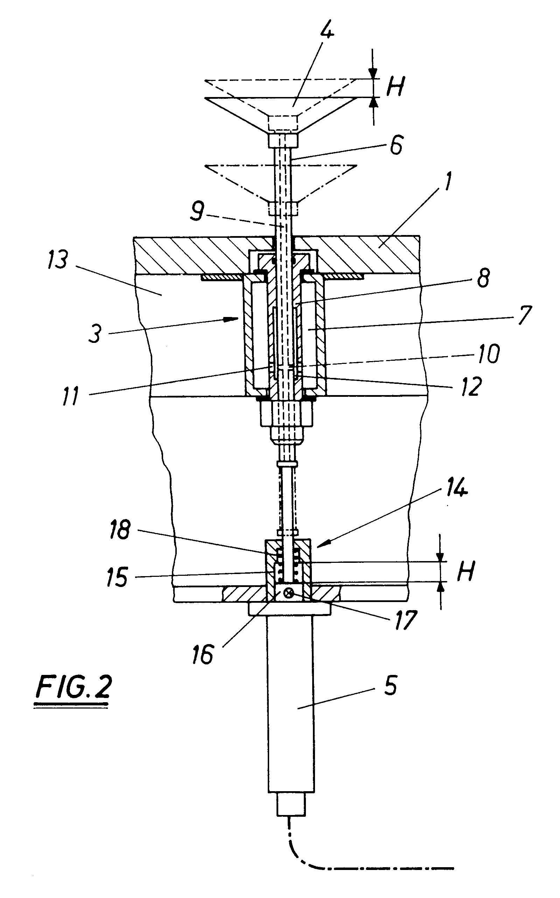

Um Werkstücke weitgehend unabhängig von Form, Größe und Steifigkeit für eine Bearbeitung, insbesondere eine Randbearbeitung durch Umrißfräsen, gut und sicher spannen zu können, gibt es einen Arbeitstisch 1, dessen Auflage 2 sich aus einer Mehrzahl in einer rasterähnlichen Teilung nebeneinander angeordneter Unterdrucksauger 3 zusammensetzt, wobei zur Anpassung der Auflage 2 an verschiedene Werkstücke auch eine Gruppe von Saugern 3 innterhalb eines Bereiches 2a mit geänderter Teilung angeordnet sein kann. Die Unterdrucksauger 3 besitzen kopfseitig Saugnäpfe 4 tragende, jeweils über individuell ansteuerbare Zylindertriebe 5 als Stelltriebe höhenverstellbar geführte Hubstempel 6, so daß die Unterdrucksauger 3 aus einer unteren Ruheposition (strichpunktierte Darstellung in Fig. 2) in eine obere Wirkstellung hochfahrbar sind, wobei die Saugnäpfe 4 zur Anpassung an die jeweilige Form und/oder Lage der Werkstückoberfläche in nicht weiter dargestellter Weise verschwenkbar am Hubstempel 6 angelenkt sind.

Gemäß dem Ausführungsbeispiel nach Fig. 2 werden die Unterdrucksauger 3 automatisch beim Hochfahren aus der Ruheposition in die Wirkstellung unterdruckbeaufschlagt. Dazu ist der in einer eine Saugkammer 7 durchragenden Büchse 8 verschiebbar geführte Hubstempel 6 mit einer axialen Saugbohrung 9 und einer radialen Anschlußbohrung 10 versehen und die Büchse 8 weist eine Querbohrung 11 auf, die je nach Höhenlage des Hubstempels 6 die Saugbohrung 9 über die Anschlußbohrung 10 mit der Saugkammer 7 verbindet oder absperrt. Durch entsprechende Wahl der Anschlußbohrung 10 und der Anordnung der Querbohrung 11, die gegebenenfalls in einen inneren Ringraum 12 übergehen kann, läßt sich daher auf einfache Weise beim Hochfahren des Hubstempels 6 innerhalb des Überschneidungsbereiches zwischen Anschlußbohrung 10 und Querbohrung 11 bzw. Ringraum 12 eine beliebige Wirkstellung einnehmen, in der der Saugnapf 4 über die Unterdruckkammer 7 unterdruckbeaufschlagbar ist.

Da nicht jeder Unterdrucksauger 3 eine eigene Unterdruckkammer oder einen eigenen Unterdruckanschluß erfordert, sind für jeweils eine Saugerreihe jeweils gemeinsame Saugkammern 7 vorgesehen, die im Tischgestell eingesetzt sind und gleichzeitig Trägerfunktionen ausüben. Dabei werden zweckmäßigerweise in den längsseitigen Tischholmen 13, an die die Saugkammern 7 stirnseitig anschließen, die zu der an sich nicht gezeigten Unterdruckquelle führenden Anschlußleitungen 114 für die Saugkammern 7 verlegt sein.

Für jeden Unterdrucksauger 3 ist eine Klemmeinrichtung 14 vorgesehen, die am Hubstempel 6 angreift und aus einem innerhalb einer Höhenführung 15 hin- und herbewegbaren Gleitstein 16 mit einem nur angedeuteten Klemmbacken 17 besteht. Eine Rückholfeder 18 hält den Gleitstein 16 am unteren Endpunkt des durch die Höhenführung 15 bestimmten Verschiebeweges H. Wird der Klemmbacken 17 durch seine nicht weiter dargestellte Betätigungsvorrichtung druckbeaufschlagt, verklemmt er Hubstempel 6 und Gleitstein 16 miteinander, so daß dann eine Beaufschlagung des Zylindertriebes 5 den Gleitstein 16 zusammen mit dem Hubstempel 6 um genau den Verschiebeweg H hochbewegt und am oberen Endpunkt dieses Verschiebeweges fixiert.

Zum Haltern eines Werkstückes werden beispielsweise drei ausgewählte Unterdrucksauger 3, die sich zur punktförmigen Abstützung des Werkstückes eignen, als Werkstückauflage in ihre Sollposition hochgefahren und fixiert, welche Sollposition entweder direkt oder indirekt über eine vorjustierte Warteposition angefahren wird. Die übrigen im Abstützungsbereich des zu bearbeitenden Werkstückes vorhandenen Unterdrucksauger werden entsprechend der Oberflächenform des Werkstückes der Höhe nach in einer Warteposition einjustiert, in der sie exakt um die Verschiebeweglänge H des Gleitsteins 16 unterhalb der eigentlichen, das Werkstück spannenden Sollposition liegen, wozu übliche Positioniermaßnahmen eingesetzt werden, etwa das Höhenpositionieren über eine entsprechend ansteuerbare Werkzeugspindel. In dieser Warteposition werden die Unterdrucksauger durch Betätigung der Klemmeinrichtung 14 fixiert. Da die Wirkpositionen der Unterdrucksauger innerhalb eines beträchtlichen Höhenbereiches liegen können, sind die Sauger konstruktionsbedingt sowohl in der Sollposition als auch in der Warteposition in einer unterdruckbeaufschlagten Wirkstellung, was durch eine geeignet leistungsfähige Unterdruckquelle zu berücksichtigen ist. Nun läßt sich das zu bearbeitende Werkstück auf die drei in Sollposition hochgefahrenen Unterdrucksauger einwandfrei und justiert auflegen, worauf die übrigen Unterdrucksauger 3 durch ein Beaufschlagen der zugehörenden Zylindertriebe 5 am Werkstück angesetzt werden. Die Hubstempel 6 können dabei lediglich um genau den Verschiebeweg H der Klemmeinrichtungen 14 anheben und bringen so die Unterdrucksauger in ihre exakte Sollposition. Hier legen sich die Saugnäpfe 4 ohne Ansatzdruck an der Werkstückoberfläche an und übernehmen ihre Spannfunktion, wobei das Anschmiegen der Saugnäpfe am Werkstück durch die gelenkige Lagerung der Saugnäpfe 4 am Hubstempel 6 und/oder eine entsprechend elastische Ausgestaltung der Saugnäpfe 4 ermöglicht wird.

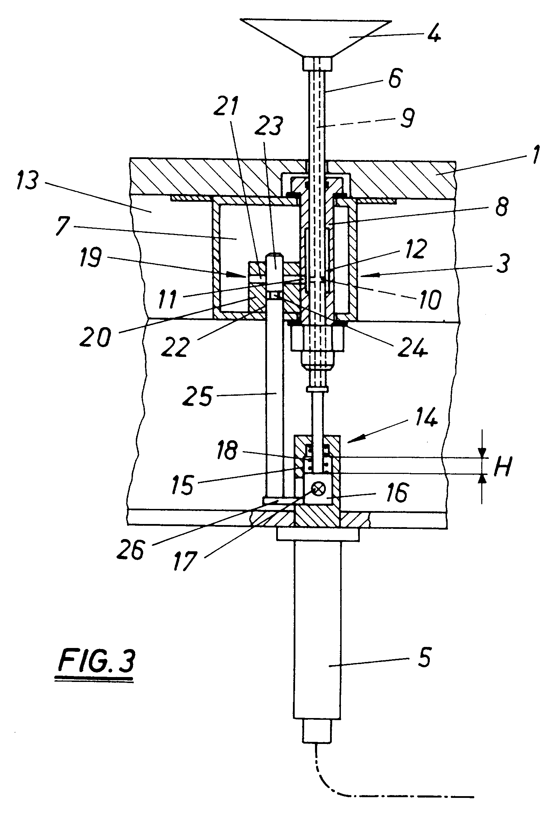

Gemäß dem Ausführungsbeispiel nach Fig. 3 ist jedem Unterdrucksauger 3 ein Absperrorgan 19 zum Anschluß an die Unterdruckquelle zugeordnet, das jeweils in Abhängigkeit von der Verschiebebewegung der zugehörigen Klemmeinrichtung 14 betätigbar ist. Dieses Absperrorgan 19 besteht aus einem an der Büchse 8 angesetzten Schiebergehäuse 20, das eine in die Querbohrung 11 der Büchse 8 übergehende Einlaßbohrung 21 und eine zur Büchse 8 achsparallele Schieberführung 22 bildet, wobei ein in der Schieberführung 22 schiebeverstellbar geführter Sperrschieber 23 die Einlaßbohrung 21 sperrt und nur in einer Offenstellung über einen Durchlaß 24 freigibt. Der Sperrschieber 23 ist mittels eines Gestänges 25 an die Klemmeinrichtung 14 gekoppelt, deren Gleitstein 16 einen am Gestänge 25 angreifenden Mitnehmerarm 26 trägt. Sperrschieber 23 und Gleitstein 16 sind so aufeinander abgestimmt, daß der Sperrschieber 23 beim Hochbewegen des Gleitsteins um den Verschiebeweg H die Einlaßbohrung 21 freigibt und damit den Unterdrucksauger 3 an die Unterdruckquelle anschließt.

Dadurch ist es nun möglich, die Unterdrucksauger 3 noch in Warteposition belüftet zu halten und sie erst beim Erreichen ihrer Sollposition unterdruckzubeaufschlagen, was das Unterdrucksystem wesentlich entlastet. Außerdem können die Unterdrucksauger 3 mittels dieser Absperrorgane 19 auch während einer Werkstückhalterung einzeln belüftet und dadurch gefahrlos abgesenkt werden, wenn diese etwa einer Bohroperation im Wege wären. Dazu braucht lediglich der Stelltrieb 5 inaktiviert und der Klemmbacken 17 gelöst zu werden, wodurch eine Belastung auf den Hubstempel 6 abgebaut und der Gleitstein gegenüber dem Hubstempel 6 abwärtsbewegt wird, so daß der Sperrschieber 23 die Einlaßbohrung 21 schließt und den Unterdrucksauger 3 belüftet. Ein Rückzug des Stelltriebes 5 hebt den Saugnapf 4 drucklos vom Werkstück ab und erlaubt sein Absenken in die Warteposition.

## Patentansprüche

1. Arbeitstisch (1) für Werkzeugmaschinen, mit einer Mehrzahl von Unterdrucksaugern (3) zur Halterung der zu bearbeitenden Werkstücke, wobei die Unterdrucksauger (3) kopfseitig Saugnäpfe (4) tragende Hubstempel (6) aufweisen, die über Stelltriebe (5) höhenverstellbar geführt und mittels Klemmeinrichtungen (14) in beliebiger Höhenlage fixierbar sind, dadurch gekennzeichnet, daß ein mit dem Hubspindel (6) verbindbarer Teil (16) jeder Klemmeinrichtung (14) in Verstellrichtung der Hubstempel (6) um einen vorbestimmten Verschiebeweg (H) verschiebbar abgestützt und über eine Stellvorrichtung (5, 18) zwischen den Endpunkten des Verschiebeweges (H) hin- und herbewegbar ist.

2. Arbeitstisch nach Anspruch 1, dadurch gekennzeichnet, daß die Stellvorrichtung der Klemmeinrichtungen (14) jeweils aus dem Stelltrieb (5) des zugehörigen Hubstempels (6) und einer Rückholfeder (18) besteht.

3. Arbeitstisch nach Anspruch 1 oder 2, dadurch gekennzeichnet, daß zumindest die mit verschiebbar abgestützten Klemmeinrichtungen (14) ausgestatteten Unterdrucksauger (3) einzeln betätigbare Absperrorgane (19) zum Anschluß an eine Unterdruckquelle aufweisen.

4. Arbeitstisch nach Anspruch 3, dadurch gekennzeichnet, daß die Absperrorgane (19) jeweils in Abhängigkeit von der Verschiebebewegung der zugehörigen Klemmeinrichtungen (14) betätigbar sind.

5. Arbeitstisch nach Anspruch 4, dadurch gekennzeichnet, daß die schiebeverstellbaren Klemmeinrichtungsteile über Gestänge (25) an einem Betätigungsteil (23) der Absperrorgane (19) angreifen.

6. Arbeitstisch nach Anspruch 4, dadurch gekennzeichnet, daß die schiebeverstellbaren Klemmeinrichtungsteile mit Betätigungsschaltern für die Absperrorgane (19) zusammenwirken.

7. Verfahren zum Haltern eines Werkstückes auf einem Arbeitstisch nach einem der Ansprüche 1 bis 6, bei dem die im Auflagebereich (2) des Werkstückes liegenden Unterdrucksauger (3) aus einer unteren Ruheposition in eine obere, an die Werkstückoberfläche angepaßte Sollposition hochgefahren und unterdruckbeaufschlagt werden, dadurch gekennzeichnet, daß zuerst einige, vorzugsweise drei der Unterdrucksauger (3) als Werkstückauflage in ihre Sollposition hochgefahren und gegebenenfalls fixiert und die übrigen der für die Werkstückhalterung vorgesehenen Unterdrucksauger (3) in eine gegenüber ihrer Sollposition um die Verschiebeweglänge (H) der Klemmeinrichtungen (14) niedrigere Warteposition hochgefahren und in dieser mit den an den unteren Endpunkten der Verschiebewege sich befindenden Klemmeinrichtungen (14) festgeklemmt werden oder daß zuerst alle die zur Werkstückhalterung vorgesehenen Unterdrucksauger (3) in eine gegenüber ihrer Sollposition um die Verschiebeweglänge (H) der Klemmeinrichtungen niedrigere Warteposition hochgefahren und in dieser mit den an den unteren Endpunkten der Verschiebewege sich befindenden Klemmeinrichtungen (14) festgeklemmt und dann einige, vorzugsweise drei dieser Unterdrucksauger (3) als Werkstückauflage durch Hochbewegen der Klemmeinrichtungen (4) zu den oberen Endpunkten der Verschiebewege aus der Warteposition in ihre Sollposition gebracht werden, worauf das Werkstück auf die die Werkstückauflage bildenden Unterdrucksauger (3) aufgelegt wird und danach die übrigen Unterdrucksauger (3) durch Hochbewegen der Klemmeinrichtungen (14) zu den oberen Endpunkten der Verschiebewege aus der Warteposition in ihre Sollposition gebracht werden.

8. Verfahren nach Anspruch 7, dadurch gekennzeichnet, daß die Unterdrucksauger (3) gruppenweise in die Warteposition hochgefahren bzw. aus der Warteposition in die Sollposition gebracht werden.

## Claims

1. A work table (1) for machine tools, comprising a number of negative-pressure suckers (3) for holding the workpieces for machining, the suckers (3) having jacks (8) bearing suction cups (4) at the head end and guided for vertical adjustment by adjusting drives (5) and adapted to be secured in any vertical position by clamping means (14), characterised in that a part (16) of each clamping means (14) connectable to the jack (6) is supported so as to be movable by a given travel distance (H) in the direction of adjustment of the jacks (6) and is movable in reciprocation between the end points of the travel (H) by an adjusting device (5, 18).

2. A work table according to claim 1, characterised in that the device for adjusting each clamping means (14) comprises a return spring (18) and the drive (5) for adjusting the associated jack (6).

3. A work table according to claim 1 or 2, characterised in that at least the negative-pressure suckers (3) equipped with movable clamping means (14) have individually actuated shut-off means (19) for connection to a negative-pressure source.

4. A work table according to claim 3, characterised in that the shut-off means (19) are each actuated in dependence on the travel of the associated clamping means (14).

5. A work table according to claim 4, characterised in that the slidable parts of the clamping means engage an actuating part (23) of the shut-off means (19) via linkages (25).

6. A work table according to claim 4, characterised in that the slidable parts of the clamping means cooperate with switches for actuating the shut-off means (19).

7. A method of holding a workpiece on a work table according to any of claims 1 to 6, wherein the suckers (3) disposed in the region (2) where the workpiece is supported are moved upwards from a lower inoperative position to an upper set position adapted to the workpiece surface and are negatively pressurised, characterised in that firstly some of the suckers (3), preferably three suckers, serving as supports for the workpiece are raised into their set position and optionally secured and the other suckers (3) provided for holding the workpiece are moved up to a standby position lower than their set position by an amount equal to the distance (H) travelled by the clamping means (14) and are firmly clamped in the standby position by the clamping means (14) at the lower end points of the travel, or in that initially all the suckers (3) provided for holding the workpiece are moved up to a standby position lower than their set position by a distance (H) equal to the distance (H) travelled by the clamping means and are firmly clamped therein by the clamping means (14) at the lower end points of the travel, after which some suckers (3), preferably three suckers, constituting a workpiece support are moved out of the standby position into their set position by the clamping means (4) being moved up to the upper end points of the travel, whereupon the workpiece is placed on the suckers (3) constituting the support, after which the remaining suckers (3) are brought from the standby position to their set position by the clamping means (14) being moved up to the upper end points of the travel.

8. A method according to claim 7, characterised in that the suckers (3) are moved up to the standby position or are brought from the standby position to the set position in groups.

## Revendications

1. Table (1) pour machines-outils, comprenant une pluralité d'aspirateurs à dépression (3) pour maintenir la pièce à usiner, cependant que les aspirateurs à dépression (3) présentent des tiges de levage (6) qui portent des ventouses (4) du côté de leur extrémité supérieure, qui sont guidées en pouvant être déplacées en hauteur par l'intermédiaire de mécanismes de commande (5) et qui peuvent être fixées dans une position en hauteur quelconque au moyen de dispositifs de serrage (14), caractérisée par le fait qu'une partie (16) de chaque dispositif de serrage (14) qui peut être reliée à la tige de levage (6) est supportée en pouvant coulisser sur un trajet de coulissement prédéterminé (H) dans la direction de coulissement des tiges de levage (6), et qu'elle peut être déplacée en va-et-vient entre les extrémités du trajet de coulissement (H) par l'intermédiaire d'un dispositif de commande (5, 18).

2. Table selon la revendication 1, caractérisée par le fait que le dispositif de commande des dispositifs de serrage (14) est constitué à chaque fois par le mécanisme de commande (5) de la tige de levage associée (6) et par un ressort de rappel (18).

3. Table selon la revendication 1 ou 2, caractérisée par le fait qu'au moins les aspirateurs à dépression (3) qui sont équipés de dispositifs de serrage (14) supportés d'une manière coulissante présentent des organes de fermeture à actionnement individuel (19) en vue de leur raccordement à une source de dépression.

4. Table selon la revendication 3, caractérisée par le fait que les organes de fermeture (19) peuvent être actionnés à chaque fois en fonction du déplacement en coulissement des dispositifs de serrage associés (14).

5. Table selon la revendication 4, caractérisée par le fait que les parties coulissantes des dispositifs de serrage viennent en prise par l'intermédiaire d'une tringle (25) avec une pièce d'actionnement (23) des organes de fermeture (19).

6. Table selon la revendication 4, caractérisée par le fait que les parties coulissantes des dispositifs de serrage coopèrent avec des commutateurs d'actionnement destinés aux organes de fermeture (19).

7. Procédé pour maintenir une pièce sur une table selon l'une des revendications 1 à 6, dans lequel on élève les aspirateurs à dépression (3) situés dans la zone d'appui (2) de la pièce depuis une position inférieure de repos jusqu'à une position supérieure de travail adaptée à la surface de la pièce, et on les soumet à une dépression, caractérisé par le fait que l'on élève tout d'abord jusqu'à leur position de travail quelques-uns des aspirateurs à dépression (3), et de préférence trois, pour servir d'appui à la pièce, et qu'on les fixe le cas échéant, que l'on élève les autres aspirateurs à dépression (3) qui sont prévus pour le maintien de la pièce jusqu'à une position d'attente qui est plus basse que leur position de travail d'une valeur égale à la longueur des trajets de coulissement (H) des dispositifs de serrage (14), et qu'on les serre dans cette position au moyen des dispositifs de serrage (14) qui se trouvent aux extrémités inférieures des trajets de coulissement, ou par le fait que l'on élève tout d'abord tous les aspirateurs à dépression (3) qui sont prévus pour le maintien de la pièce jusqu'à une position d'attente qui est plus basse que leur position de travail d'une valeur égale à la longueur des trajets de coulissement (H) des dispositifs de serrage (14), et qu'on les serre dans cette position au moyen des dispositifs de serrage qui se trouvent aux extrémités inférieures des trajets de coulissement, et qu'en élevant les dispositifs de serrage (14), on amène ensuite jusqu'aux extrémités supérieures des trajets de coulissement, depuis la position d'attente jusqu'à leur position de travail, quelques-uns des aspirateurs à dépression (3), et de préférence trois, pour servir d'appui à la pièce, après quoi on pose la pièce sur les aspirateurs à dépression (3) qui constituent l'appui de la pièce, et ensuite, en élevant les dispositifs de serrage (14), on amène les autres aspirateurs à dépression (3) jusqu'aux extrémités supérieures des trajets de coulissement, depuis la position d'attente jusqu'à leur position de travail.

8. Procédé selon la revendication 7, caractérisé par le fait que l'on élève par groupes les aspirateurs à dépression (3) jusque dans la position d'attente ou, respectivement, qu'on les amène depuis la position d'attente jusqu'à la position de travail.
